# EUROPEAN PATENT APPLICATION

(11) **EP 0 737 910 A2**
(43) Date of publication of application: **16.10.1996**
(21) Application number: 96105716.3
(22) Date of filing: 11.04.1996
(51) Int. Cl.: G06F 3/023, G06F 3/033

(54) **Method and apparatus for inputting data**

(30) Priority: 14.04.1995 JP 89027/95
(71) Applicant: HITACHI, LTD., Chiyoda-ku, Tokyo 100 (JP)
(72) Inventor: Kayashima, Makoto, Yamato-shi (JP); Maruoka, Tetsuya, 17-12, Yutakacho, Sagamihara-shi (JP); Masuishi, Tetsuya, Machida-shi (JP); Okoda, Takashi, Tama-shi (JP); Umeki, Hisashi, Totsuka-ku, Yokohama-shi (JP)
(74) Representative: Strehl Schübel-Hopf Groening & Partner

(57) **Abstract**

A data inputting method of the invention uses a key input monitoring portion (13) for receiving key input and mouse input from a user and for monitoring cursor position changes indicating character input positions and input data processing mode changes and a learning portion (14) for learning the correlation between a sequence of cursor position changes and a sequence of input data processing mode changes extracted by the key input monitoring portion, so that when a change of the cursor position is informed from the key input monitoring portion, the cursor position after the position change is registered in a learning data table (141) in the learning portion, while when a change of the input data processing mode is informed from the key input monitoring portion, the input data processing mode after the mode changing is registered in the learning data table in the learning portion, and that when a sequence of cursor position changes analogous to the pattern recorded in the learning data table is detected, the input data processing mode is changed by using the data registered in the learning data table.

## Description

### BACKGROUND OF THE INVENTION

The present invention relates to a data inputting method in a computer system, and particularly relates to a data inputting method effective in software which performs inputting data such as table data, or the like, while changing input data processing mode.

As a data inputting method for accurately and efficiently inputting data such as table-format data composed of a plurality of items, there is a technique in which data inputting efficiency is improved by using both the hierarchical structure of items and the record of data selected by a user when data composed of a plurality of items with a hierarchical structure are inputted, as disclosed in JP-A-6-124156.

In a Microsoft database processing tool 'MS Access' which has a control function for kana (phonetic characters)-kanji (ideographic characters) translation, there is a technique in which key operations for changing input mode are reduced by user's registration of a default input mode corresponding to each character input position.

In the table-format data inputting method disclosed in JP-A-6-124156, a user is required to input data while changing the input data processing mode when it is necessary to effect somewhat processing to data inputted through a keyboard. For example, in the case where two-byte character data such as kanji, or the like, and one-byte character data such as alphameric characters, or the like, are mixed in input data, the user is required to input data while changing the kana-kanji translation mode so that the character code string inputted through the keyboard are processed by a kana-kanji translation front end processor.

Further, in the Microsoft database processing tool 'MS Access', a default value of the input data processing mode is registered correspondingly to each character input position so that key input operations for changing the input data processing mode after the movement of the item can be reduced. It is however necessary for the user to carry out in advance the registering operation for setting the default value of the input data processing mode correspondingly to each character input position.

### SUMMARY OF THE INVENTION

An object of the present invention is to provide a data inputting method in which the operation of registering the input data processing mode correspondingly to each character input position is eliminated so that troublesome key operations for key input except input data are reduced at the time of inputting of data.

In order to achieve the foregoing object, according to an aspect of the present invention, the data inputting method comprises the steps of: monitoring a sequence of cursor position changes indicating character input positions and a sequence of changes of an input data processing mode; learning the correlation between these sequences; and changing the cursor position or input data processing mode by using the learning result when an analogous sequence of changes of the cursor position is detected.

To this end, a data inputting apparatus according to the present invention comprises: a key input monitoring portion for receiving key input and mouse input from a user and for monitoring cursor position changes indicating character input positions and input data processing mode changes; and a learning portion for learning the correlation between a sequence of cursor position changes and a sequence of input data processing mode changes extracted by the key input monitoring portion. Further, upon information of a cursor position change or an input data processing mode change from the key input monitoring portion, the cursor position after the position change or the input data processing mode after the input data mode change is registered in a learning data table in the learning portion. When a sequence of cursor position changes analogous to the pattern recorded in the learning data table is detected by the learning portion, the input data processing mode is changed by using the data on the learning data table.

According to the present invention, the correlation between a sequence of cursor position changes and a sequence of input data processing mode changes extracted by monitoring the user's key input operations is registered in a learning data table so that the input data processing mode is changed by using the data registered in the learning data table. Accordingly, because the input data processing mode can be changed when the cursor position is changed without requiring the registering operation for setting the input data processing mode whenever the user inputs data, there arises an effect of reducing troublesome key operations for changing the input data processing mode to thereby make effective data inputting possible.

### BRIEF DESCRIPTION OF THE DRAWINGS

Fig. 1 is a configuration diagram of a computer system according to the present invention;
Fig. 2 is a diagram showing a specific example of table-format data to be subjected to data inputting;
Fig. 3 is a diagram showing a sequence of keys inputted by a user;
Fig. 4 is a diagram showing the structure of a learning data table;
Figs. 5A to 5F are diagrams showing a process of producing the learning data table;
Figs. 6A to 6C are diagrams showing a process of setting input mode ID by using the learning data table;
Fig. 7 is a schematic flow chart of the data inputting method according to the present invention;
Fig. 8 is a detailed flow chart showing the procedure of generating learning data; and
Fig. 9 is a detailed flow chart showing the procedure of using the learning data.

### DESCRIPTION OF THE PREFERRED EMBODIMENT

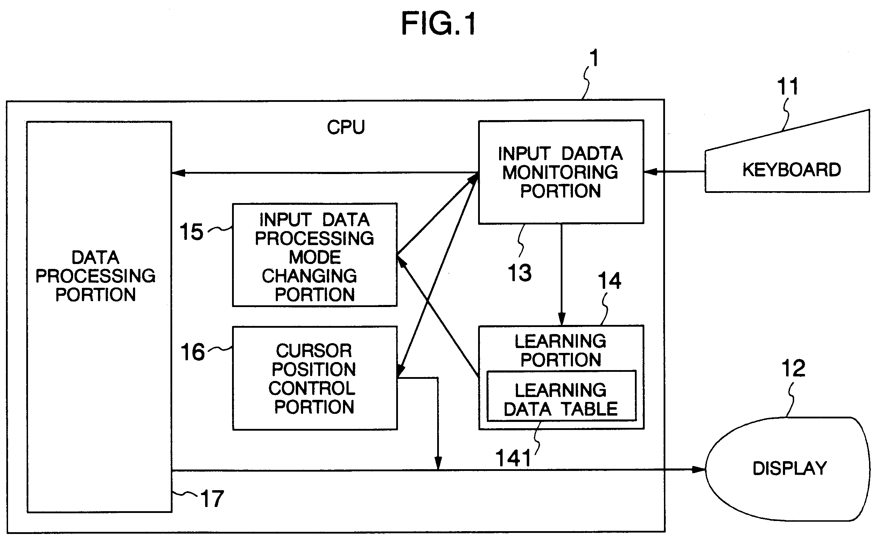

An embodiment of the present invention will be described with reference to Figs. 1 through 9.

Fig. 1 is a diagram showing the configuration of a computer system for carrying out a data inputting method according to the present invention. The computer system comprises a central processing unit (CPU) 1, a keyboard 11, and a display 12. The CPU 1 includes an input data monitoring portion 13 for monitoring data inputted from the keyboard 11, and a learning portion 14 for learning the correlations between input data processing mode change codes and cursor position change codes notified by the input data monitoring portion 13. Further, the learning portion 14 has a learning data table 141 for registering the correlation between a sequence of cursor position changes and a sequence of input data processing mode changes extracted by monitoring the user's key inputting operation. The CPU 1 further includes an input data processing mode changing portion 15 for changing the input data processing mode, a cursor position control portion 16 for controlling the cursor position expressing an item input position, and a data processing portion 17 for processing text data inputted through the keyboard.

Upon detection of a cursor position change code indicating a cursor position change or upon detection of an input data processing mode change code, the input data monitoring portion 13 notifies the positional information of the cell cursor (indicating the position by cell constituting a table) after the position change or the input data processing mode after the mode change to the learning portion 14 and the cursor position control portion 16. Upon reception of the cursor position change code from the input data monitoring portion 13 or upon reception of the input data processing mode change code from the input data monitoring portion 13, the learning portion 14 records a cell corresponding to the cursor after the position change or the input data processing mode after the mode changing into the learning data table 141, respectively. Being informed of the change of the cell cursor position from the input data monitoring portion 13 when some learning data is present in the learning data table 141, the learning portion 14 estimates the input data processing mode in the cell after the position change on the basis of the cells before and after the position change and the input data processing mode in the cell before the position change and notifies an input data processing mode change code to the input data processing mode changing portion 15.

The display 12 displays text data processed by the data processing portion 17. The input data processing mode changing portion 15 has a function for changing a kana-kanji translation mode, a replace/insert processing mode for determining whether the existing data are replaced by input data or whether input data are inserted in the existing data, a character/numeric input processing mode for determining whether input data are processed as a string of characters or as a string of numeric data, classification of a font used for display of the display 12, classification of a front end processor used for kana-kanji translation, classification of a kana-kanji translation dictionary used in the front end processor, and so on. Particularly in the case of English language, classification such as 2-byte/1-byte, capital letter/small letter, or the like, is provided as an input data processing mode.

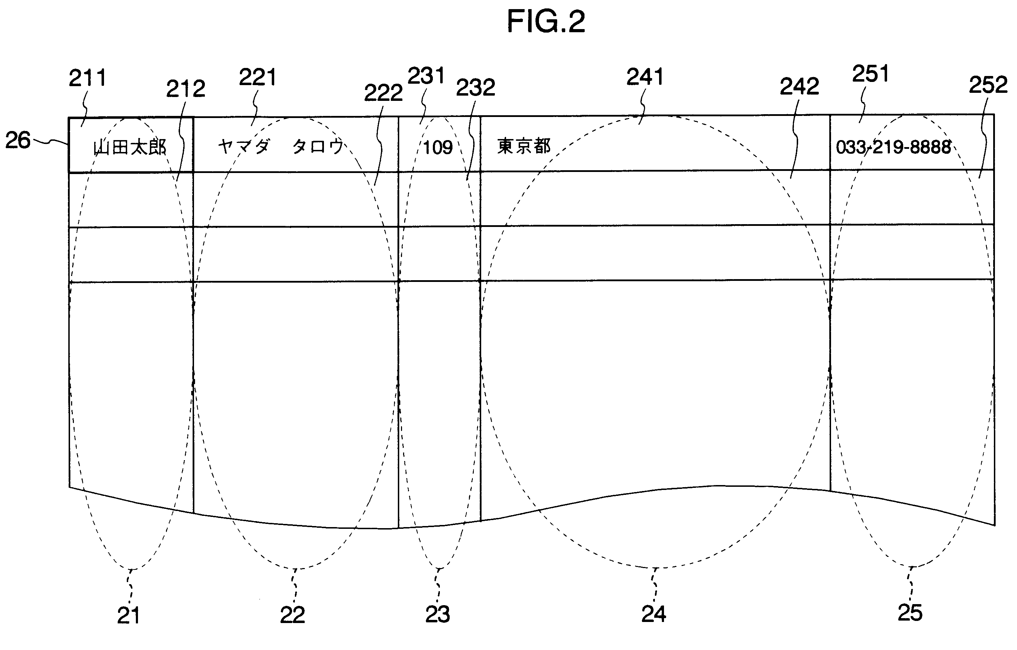

Fig. 2 is a diagram showing a table-format address book displayed by an address book program as an example of input data in the embodiment of the data inputting method according to the present invention. The address book shown in Fig. 2 contains a name field 21, a kana-written name field 22, a postal code field 23, an address field 24, and a telephone number field 25. Each field is constituted by a set of cells which are identical to each other in field length. The cell in which data can be inputted currently is identified by a cell cursor 26.

In the address book program, it is necessary to input a character string data composed of a 1-byte code (ASCII code) and a 2-byte code (kanji code). In the data inputting method according to the present invention, the kana-kanji translation mode is changed by the input data processing mode changing portion 15 to thereby input a character string data of either a 2-byte code or a 1-byte code. In an example of address book data input in this embodiment, kana-kanji translation processing is assumed to have the following modes.

### 1. Hiragana (kana-kanji translation) mode

A mode for interpreting an input character code as a hiragana character string, and translating and inputting the hiragana character string into a kanji character string by pressing down a translation key.

### 2. Katakana mode

A mode for interpreting an input character code as a katakana character string (2 bytes).

### 3. One-byte katakana mode

A mode for interpreting an input character code as a one-byte katakana character string (1 byte).

### 4. Alphabet mode (character input mode)

A mode for interpreting an input character code as an alphabet character string (1 byte).

### 5. Numeric mode (numeric input mode)

A mode for interpreting an input character code as a numeric character or a numeric expression.

In the example of the address book in this embodiment, the hiragana mode is applied to the name field 21 and the address field 24, the katakana mode is applied to the kana-written name field 22, and the numeric mode is applied to the postal code field 23 and the telephone number field 25. A sequence of procedures by which a user of this method inputs data in order of the name, the kana-written name, the postal code, the address and the telephone number is expressed by the following steps.
(1) Moving the cell cursor to a cell 211 in the name field 21;
(2) Changing the current mode to the hiragana mode;
(3) Inputting the name;
(4) Moving the cell cursor to a cell 221 in the kana-written name field 22;
(5) Changing the current mode to the katakana mode;
(6) Inputting the kana-written name;
(7) Moving the cell cursor to a cell 231 in the postal code field 23;
(8) Changing the current mode to the alphabet mode;
(9) Inputting the postal code;
(10) Moving the cell cursor to a cell 241 in the address field 24;
(11) Changing the current mode to the hiragana mode;
(12) Inputting the address;
(13) Moving the cell cursor to a cell 251 in the telephone number field 25;
(14) Changing the current mode to the alphabet mode; and
(15) Inputting the telephone number.

In the embodiment of Fig. 2, the input data processing mode is required to be changed five times in order to input one person's data. In the present invention, a sequence of cell cursor position changes and a sequence of input data processing mode changes are learned to thereby eliminate troublesome key operations for changing the input data processing mode for data input after the first data input. That is, when a user of the data inputting method according to the present invention moves the cell cursor 26 to the cell 212 in the name field 21 for next entry data input after the first entry data input, inputs data in the hiragana mode and moves the cell cursor 26 to the cell 222, the input data processing mode is changed to the katakana mode automatically.

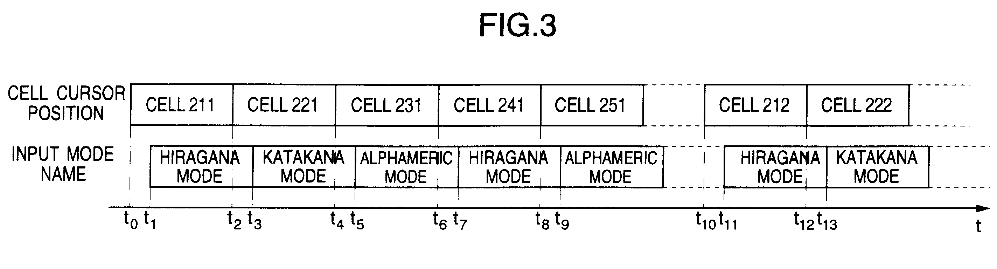

Fig. 3 shows a sequence obtained by arranging on a time axis points of time when cell cursor position change codes and input data processing mode change codes inputted by a user in the example of Fig. 2 are detected by the input data monitoring portion 13. The cell cursor position changes in order of cell 211, cell 221, cell 231, cell 241 and cell 251 whereas the input data processing mode changes in order of hiragana mode, katakana mode, alphabet mode, hiragana mode and alphabet mode. The cursor position changes and the input data processing mode changes are alternately performed.

At a point of time t0 when a cell cursor position change code is inputted, the input data monitoring portion 13 informs the learning portion 14 of the cell ID of the cell 211 to which the cell cursor has moved. The field number to which each of the cells constituting the table shown in Fig. 2 belongs is given as a cell ID to the cell. At a point of time t1 when an input data processing mode change code is inputted, the input data monitoring portion 13 informs the learning portion 14 of the input data processing mode ID of the hiragana mode which is a data input processing mode after the mode change. At a point of time t2 when a cell cursor position change code is inputted, the input data monitoring portion 13 informs the learning portion 14 of the cell ID of the cell 221 to which the cell cursor has moved. At a point of time t3 when an input data processing mode change code is inputted, the input data monitoring portion 13 informs the learning portion 14 of the input data processing mode ID of the katakana mode which is a data input processing mode after the mode change. At a point of time t4 when a cell cursor position change code is inputted, the input data monitoring portion 13 informs the learning portion 14 of the cell ID of the cell 231 to which the cell cursor has moved. At a point of time t5 when an input data processing mode change code is inputted, the input data monitoring portion 13 informs the learning portion 14 of the input data processing mode ID of the alphabet mode which is a data input processing mode after the mode change. At a point of time t6 when a cell cursor position change code is inputted, the input data monitoring portion 13 informs the learning portion 14 of the cell ID of the cell 241 to which the cell cursor has moved. At a point of time t7 when an input data processing mode change code is inputted, the input data monitoring portion 13 informs the learning portion 14 of the input data processing mode ID of the hiragana mode which is a data input processing mode after the mode change. At a point of time t8 when a cell cursor position change code is inputted, the input data monitoring portion 13 informs the learning portion 14 of the cell ID of the cell 251 to which the cell cursor has moved. At a point of time t9 when an input data processing mode change code is inputted, the input data monitoring portion 13 informs the learning portion 14 of the input data processing mode ID of the alphabet mode which is a data input processing mode after the mode change.

In the data inputting method according to the present invention, after the aforementioned sequence is executed, data processing is performed as follows. Assuming now that a cell cursor position change code is inputted at t10 to move the cell cursor to the next entry cell 212 and an input data processing mode change code is inputted at t11 to change the input data processing mode to the hiragana mode and a cell cursor position change code is inputted at t12 to move the cell cursor to the cell 222, then the input data processing mode is changed to the katakana mode at t13 automatically on the basis of the learning result without any input data processing mode change code inputted by the user.

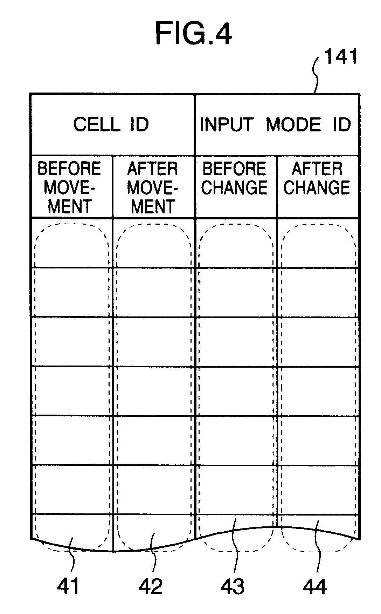

Fig. 4 is a diagram showing the structure of a learning data table 141 on which learning data used in the data inputting method according to the present invention are recorded. The learning data table 141 is composed of lines obtained by arranging in a time sequence records each having a field 41 for storing a cell ID indicating a cell before the position change at a point of time when a cell cursor position change code is received, a field 42 for storing a cell ID indicating a cell after the position change, a field 43 for storing an input data processing mode ID indicating an input data processing mode before the mode change at a point of time when an input data processing mode change code is received just after the aforementioned point of time, and a field 44 for storing an input data processing mode ID indicating an input data processing mode after the mode change.

At a point of time when a cell cursor position change code is received by the learning portion 14, a record having no data stored in the field 42 is retrieved by the learning portion 14 in order of ascending toward the head of the learning data table 141 so that a cell ID indicating a cell after the position change is stored both in the field 42 and in the field 41 of a record next to the retrieved record. At a point of time when an input data processing mode change code is received by the learning portion 14, a record having no data stored in the field 44 is retrieved by the learning portion in order of ascending toward the head of the learning data table 141 so that an input data processing mode ID indicating an input data processing mode after mode changing is stored both in the field 44 and in the field 43 of a record next to the retrieved record.

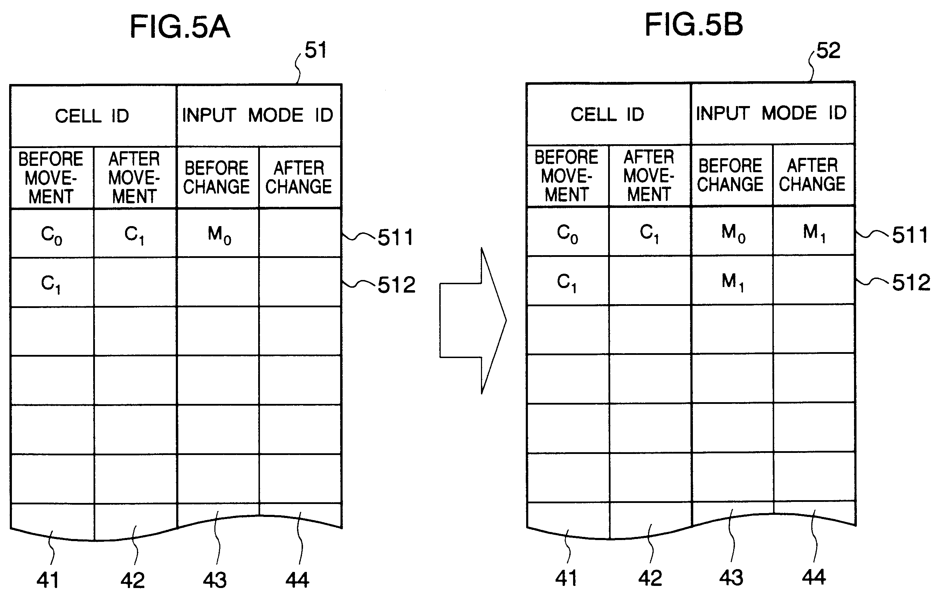

Figs. 5A to 5F are views illustrating a state in which data are stored in the learning table 141 of Fig. 4 in the sequence from t1 to t3 of Fig. 3.

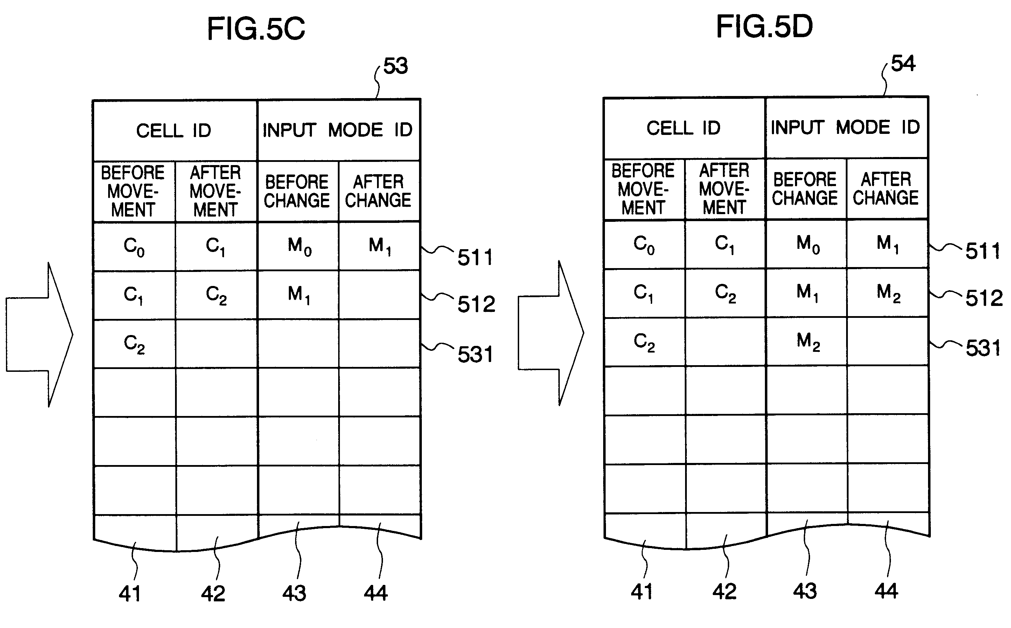

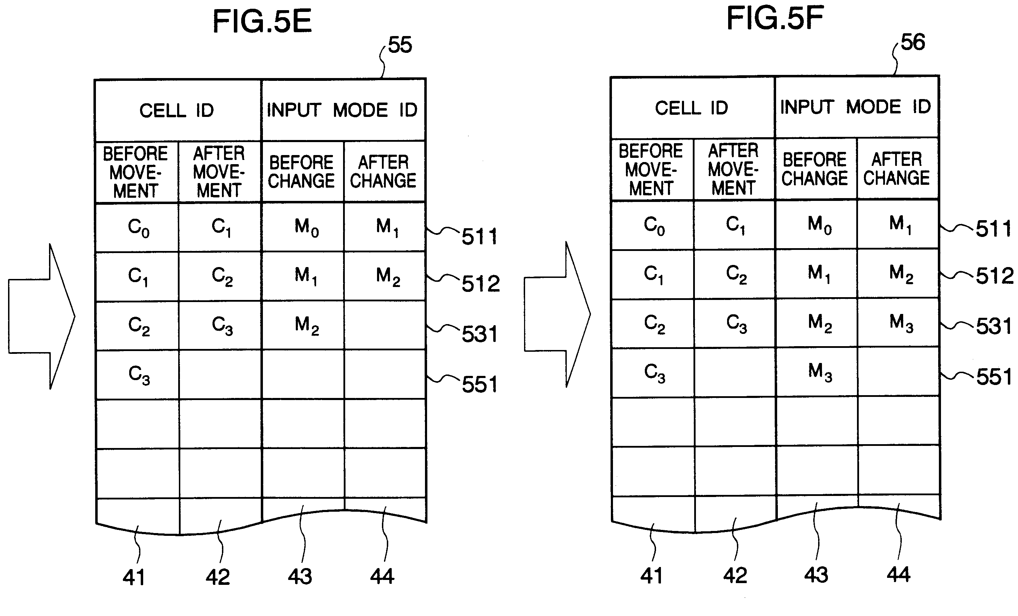

The table 51 shown in Fig. 5A shows a state of the learning data table 141 at t0. Assume that a cell ID C0 in the before-movement cell ID field of the record 511 and an input mode ID M0 in the before-change input data processing mode ID field of the record 511 have been recorded before t0. Here, C0 is an initial value which is set before data are inputted into the table-format address book shown in Fig. 2. In Fig. 5A, there is shown a state of the learning data table 141 at t0 where a record 511 having no data stored in the field 42 is retrieved in order of ascending toward the head of the learning data table 141 so that a cell ID C1 indicating a cell 211 after the position change is stored both in the field 42 of the retrieved record 511 and in the field 41 of a record 512 next to the retrieved record 511. The table 52 shown in Fig. 5B shows a state of the learning data table 141 at t1. In Fig. 5B, there is shown a state of the learning data table 141 at t1 where a record 511 having no data stored in the field 44 is retrieved in order of ascending toward the head of the learning data table 141 so that an input data processing mode ID M1 indicating the hiragana mode which is an input data processing mode after the mode change is stored both in the field 44 of the retrieved record 511 and in the field 43 of a record 512 next to the retrieved record 511. The table 53 shown in Fig. 5C represents a state of the learning data table 141 at t2. In Fig. 5C, there is shown a state of the learning data table 141 at t2 where a record 512 having no data stored in the field 42 is retrieved in order of ascending toward the head of the learning data table 141 so that a cell ID C2 indicating a cell 221 after the position change is stored both in the field 42 of the retrieved record 512 and in the field 41 of a record 531 next to the retrieved record 512. The table 54 shown in Fig. 5D represents a state of the learning data table 141 at t3. In Fig. 5D, there is shown a state of the learning data table 141 at t3 where a record 512 having no data stored in the field 44 is retrieved in order of ascending toward the head of the learning data table 141 so that an input data processing mode ID M2 indicating the katakana mode which is an input data processing mode after the mode change is stored both in the field 44 of the retrieved record 512 and in the field 43 of a record 531 next to the retrieved record 512. The table 55 shown in Fig. 5E represents a state of the learning data table 141 at t4. In Fig. 5E, there is shown a state of the learning data table 141 at t4 when a record 531 having no data stored in the field 42 is retrieved in order of ascending toward the head of the learning data table 141 so that a cell ID C3 indicating a cell 231 after the position change is stored both in the field 42 of the retrieved record 531 and in the field 41 of a record 551 next to the retrieved record 531. The table 56 shown in Fig. 5F represents a state of the learning data table 141 at t5. In Fig. 5F, there is shown a state of the learning data table 141 at t5 where a record 531 having no data stored in the field 44 is retrieved in order of ascending toward the head of the learning data table 141 so that an input data processing mode ID M3 indicating the alphabet mode which is an input data processing mode after the mode change is stored both in the field 44 of the retrieved record 531 and in the field 43 of a record 551 next to the retrieved record 531. In the present invention, the latest learning effect is obtained by retrieving a record having no data stored in a specific field in order of ascending toward the head of the learning data table 141.

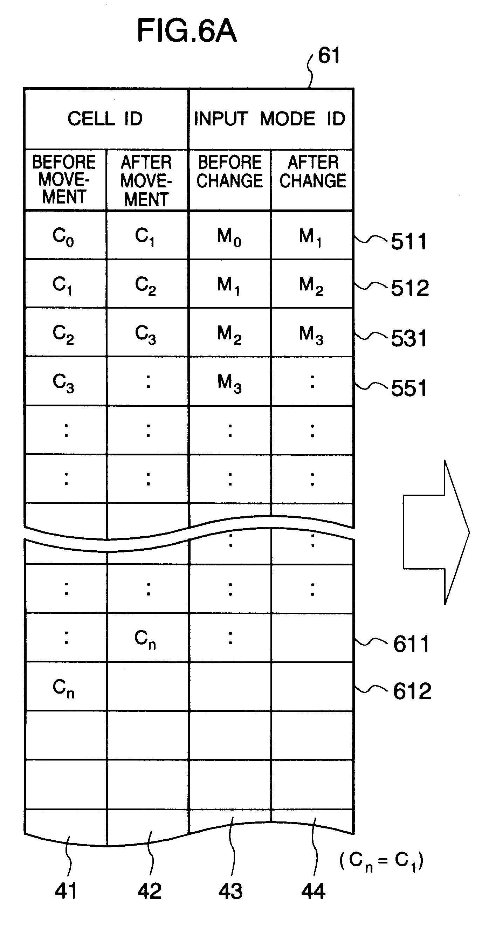

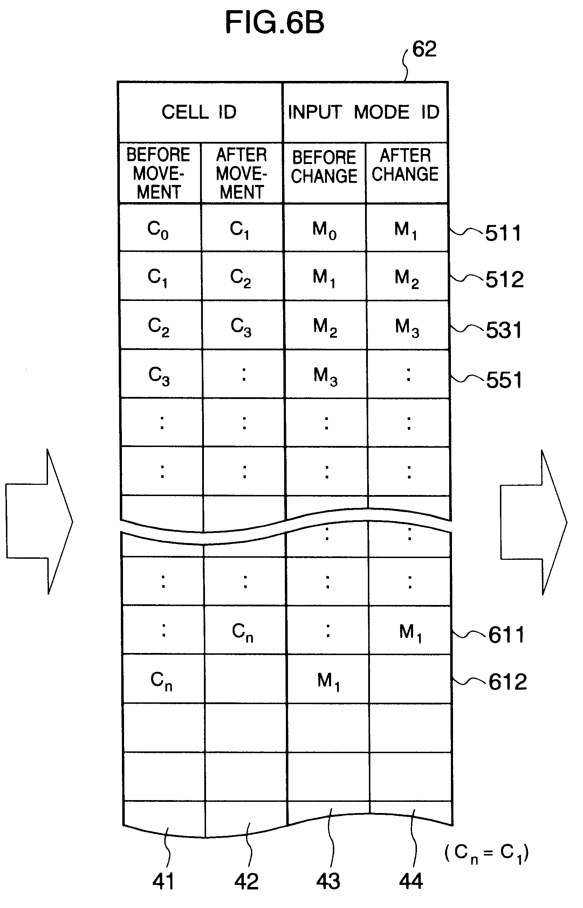

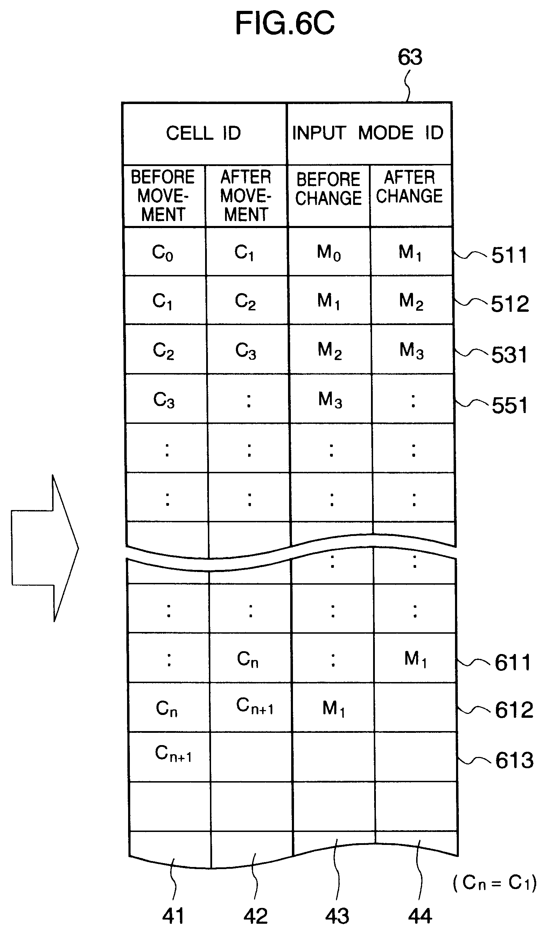

Figs. 6A to 6C are diagrams showing the condition in which input data processing modes after t13 are determined by learning on the basis of the sequence of from t10 to t13 in Fig. 3. The table 61 shown in Fig. 6A shows a state of the learning data table 141 at t10 where a record 611 having no data stored in the field 42 is retrieved in order of ascending toward the head of the learning data table 141 so that a cell ID Cn indicating a cell 212 after the position change is stored both in the field 42 of the retrieved record 611 and in the field 41 of a record 612 next to the retrieved record 611. The table 62 shown in Fig. 6B shows a state of the learning data table 141 at t11 where a record 611 having no data stored in the field 44 is retrieved in order of ascending toward the head of the learning data table 141 so that an input data processing mode ID M1 indicating the hiragana mode which is an input data processing mode after the mode change is stored both in the field 44 of the retrieved record 611 and in the field 43 of a record 612 next to the retrieved record 611. The table 63 shown in Fig. 6C shows a state of the learning data table 141 at t12 where a record 612 having no data stored in the field 42 is retrieved in order of ascending toward the head of the learning data table 141 so that a cell ID Cn+1 indicating a cell 222 after the position change is stored both in the field 42 of the retrieved record 612 and in the field 41 of a record 631 next to the retrieved record 612.

In the case where data are inputted to the table of Fig. 2 in the sequence of Fig. 3, C1 and Cn are the same cell ID because the cell 211 and the cell 212 are in one and the same field whereas C2 and Cn+1 are the same cell ID because the cell 221 and the cell 222 are in one and the same field.

At t13, the learning portion retrieves a record having a field 43 coincident with the field 43 of the record 612 on the learning data table 141 in order of ascending from the record 611 to the head of the table. When there is a record 512 retrieved and a decision is made that the record 512 is analogous to the record 612, the content M2 of the field 44 in the record 512 is stored both in the field 44 of the record 612 and in the field 43 of the record 631. In this embodiment, when two records 512 and 612 are coincident with each other in the field number of the cell identified by the cell ID stored in the field 41, and the two records 512 and 612 are coincident with each other in the field number of the cell identified by the cell ID stored in the field 42, that is, the cell ID before the position change is coincident with the cell ID after the position change, a decision is made that the two records are analogous to each other. The input data processing mode is changed on the basis of the value of the input mode ID after changing in the record decided to be analogous.

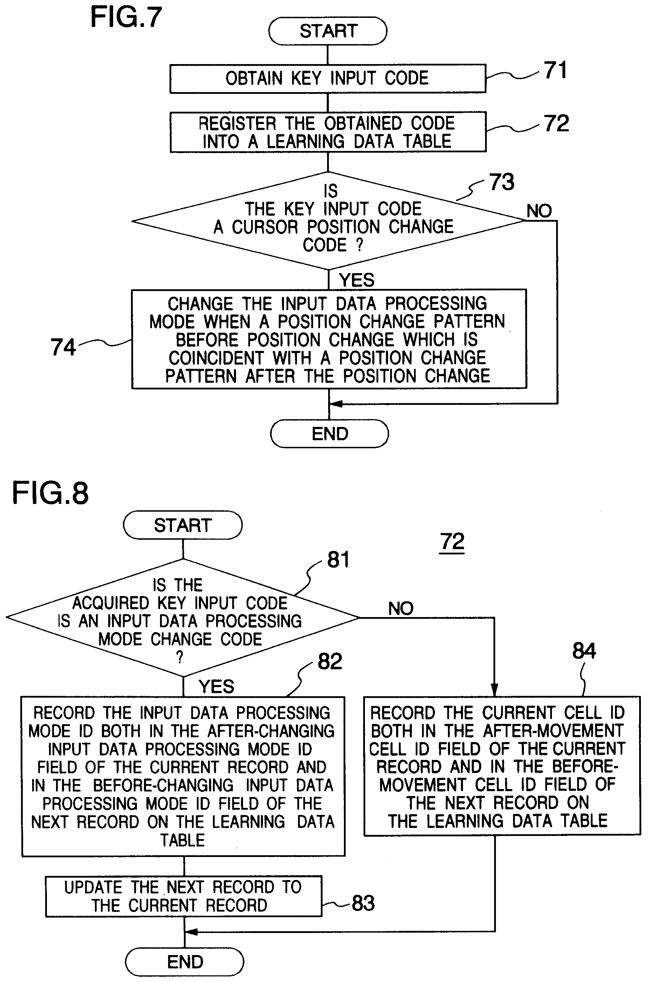

Fig. 7 is a flow chart showing the outline of a routine which is executed whenever key inputting (for changing the cursor position or for changing the input data processing mode) is performed by a user, in the data inputting method according to the present invention. The routine shown in Fig. 7 is executed by the input data monitoring portion 13 shown in Fig. 1. In step 71, a key input code inputted through the keyboard is acquired. In step 72, data (the cell ID and the input mode ID) are registered in the learning data table 141. In step 73, a judgment is made as to whether the key input code is a cursor position change code or not. In step 74, the learning data table 141 is searched so that when two patterns before and after the cursor position change are coincident with each other in the cell ID, the input data processing mode is changed on the basis of the corresponding input mode ID. When data are inputted to the first entry of the table-format data, nothing is executed in the step 74 because there is no data to be referred to on the learning data table 141.

Fig. 8 is a detailed flow chart showing the procedure of the step 72 executing the operation shown in Figs. 5A to 5F. The procedure shown in Fig. 8 is executed by the learning portion 14 shown in Fig. 1. In step 81, a judgment is made as to whether the acquired key input code is an input data processing mode change code or not. In step 82, the acquired input data processing mode ID is recorded both in the after-changing input data processing mode ID field 44 of the current record and in the before-changing input data processing mode ID field 43 of the next record on the learning data table 141 as shown in Figs. 5B, 5D and 5F. In step 83, the next record is set to the current record. In step 84, the current cell ID is recorded both in the after-movement cell ID field of the current record and in the before-movement cell ID field of the next record on the learning data table 141 as shown in Figs. 5A, 5C and 5E.

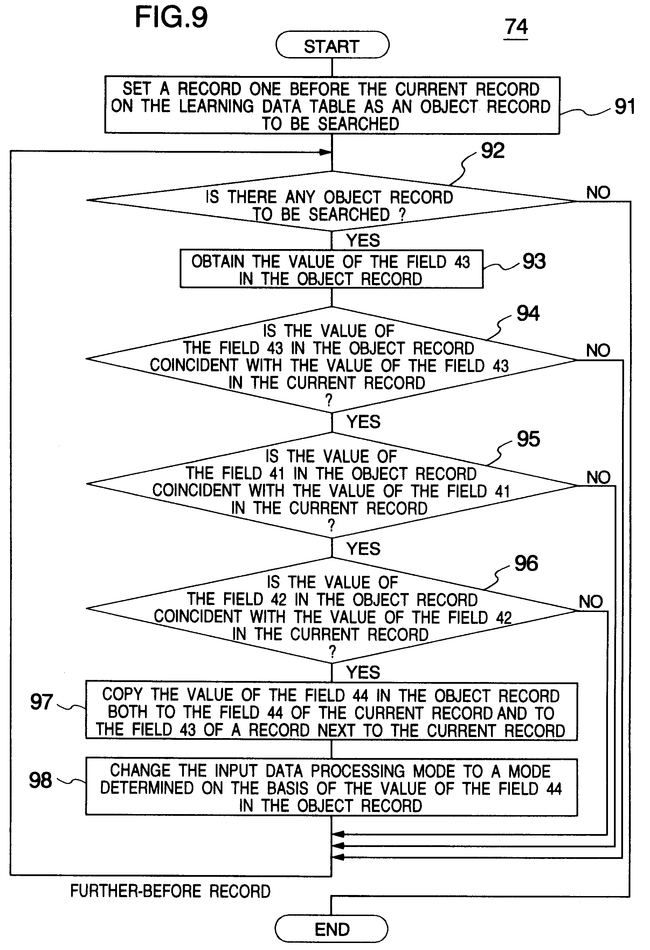

Fig. 9 is a detailed flow chart showing the procedure of the step 74 executing the operation shown in Figs. 6A to 6C. The procedure shown in Fig. 9 is executed by the input data processing mode changing portion 15 shown in Fig. 1. In step 91, a record one before the current record on the leaning data table 141 is set as an object record to be searched. In step 92, a judgment is made as to whether there is any object record to be searched or not, or a judgment is made as to whether mode changing in steps 97 and 98 is performed or not. In step 93, the value of the field 43 in the object record is acquired. In step 94, a judgment is made as to whether the value of the field 43 in the object record is coincident with the value of the field 43 in the current record or not. In step 95, a judgment is made as to whether the value of the field 41 in the object record is coincident with the value of the field 41 in the current record or not. In step 96, a judgment is made as to whether the value of the field 42 in the object record is coincident with the value of the field 42 in the current record or not. In step 97, the value of the field 44 in the object record is copied both to the field 44 of the current record and to the field 43 of a record next to the current record as shown in Fig. 6B. In step 98, the input data processing mode changing portion 15 changes the input data processing mode to a mode determined on the basis of the value of the field 44 in the object record. When there is no object record to be searched, the situation of the routine goes back to the step 92 to repeat the procedure of from the step 93 to the step 98 with the previous record as an object record to be retrieved.

When data are inputted to the first entry fields of the table-format data, the routine shown in Fig. 7 is executed twice because key inputting is performed twice for changing (setting) the cursor position and the input data processing mode. That is, the following steps are carried out in a process of learning the correlation between input data processing mode change code and cursor position change code.
(1) Cursor position changing: step 71-step 72 (step 84)-step 74 (steps 91 and 92)
(2) Mode changing: step 71-step 72 (steps 82 and 83)-step 73 to "end"
   When data are inputted to the second entry fields or to fields after the second entry of the table-format data, the following steps are carried out.
(3) Cursor position changing: step 71-step 72 (step 84)-step 74 (steps 91 to 98)

In the case where the mode is changed to a not-yet-learned input data processing mode when data is inputted to the second entry field et seq of the table-format data, the input data processing mode learned by the procedure of (3) is temporarily automatically set at the time of changing the cursor position whereas when an input data processing mode change code is then inputted, a desired input data processing mode is set on the basis of the procedure of (2).

As another method for obtaining the same effect as the present invention, there is considered a method in which a table for storing input data processing modes in fields in the table respectively is provided so that the input data processing mode of a cell to which the cursor is to be moved is changed by referring to the table at the time of cursor position changing. By this method, only any one of the input data processing modes can be stored when a plurality of input data processing mode cells are present in the same field. By the method according to the present invention, on the contrary, the mode can be changed to an appropriate input data processing mode by using the learning data even in the case where a plurality of input data processing mode cells are present in one field, because a sequence of cell cursor position changes and a sequence of input data processing mode changes are stored.

When the learning data table 141 shown in Fig. 4 becomes full, memory saving can be performed by using the first record as a record next to the final record, that is, by using the learning data table 141 cyclically. In this occasion, it is necessary to secure a larger number of records than the number of records required for inputting one-line's data of the table-format data.

Although the data inputting method according to the present invention has been described in the aforementioned embodiment, the same function as described above can be realized also by a data inputting apparatus in the form of hardware.

The data inputting method according to the present invention can be applied to the following cases.
1) A computer having a kana-kanji translation function (learning of character input position and kana-kanji translation mode);
2) A computer having a front end processor changing function (learning of character input position and front end processor changing sequence);
3) A computer having a kana-kanji dictionary changing function (learning of character input position and kana-kanji dictionary);
4) A computer having a replace/insert mode changing function (learning of character input position and replace/insert mode);
5) A computer having a character/numeric input mode changing function (learning of character input position and character/numeric mode);
6) A computer having a function for displaying a plurality of character fonts (learning of character input position and display character font classification);
7) Form data input by a computer (learning of character input position and input data processing mode); and
8) Data input from a GUI (Graphical User Interface) screen of an application program (learning of character input position and input data processing mode).

In the data inputting method according to the present invention, the correlation between a sequence of cursor position changes and key input modes at respective points of time of the sequence is learned so that troublesome key operations for inputting data can be lightened while eliminating the necessity that a user specifically performs mode changing whenever each of the table-format data is inputted by using a computer.

## Claims

1. A data inputting method in a computer system comprising the steps of:
storing, as learning data, the correlation between a sequence of cursor position changes indicating character input positions and a sequence of input data processing mode changes; and
changing the input data processing mode by using said learning data upon detection of a sequence of cursor position changes analogous to said learning data.

2. A data inputting apparatus comprising:
an input data monitoring means (13) for monitoring data inputted through a keyboard and a mouse;
a learning means (14) for learning the correlation between a sequence of input data processing mode changes extracted by said input data monitoring means and a sequence of cursor position changes indicating character input positions; and
means (15) for changing the input data processing mode by using the result of said learning.

3. A data inputting method in a computer system comprising the steps of:
recording a sequence of cursor position changes indicating character input positions and a sequence of input data processing mode changes when the cursor position and the input data processing mode are changed;
comparing the sequence of cursor position changes and the input data processing mode before the cursor position change with the recorded information when the cursor position is changed; and
changing the input data processing mode after the cursor position change by using the recorded information when analogous recorded information is present.

4. A data inputting method in a computer system having a kana-kanji translation function comprising the steps of:
storing, as learning data, the correlation between a sequence of cursor position changes indicating character input positions and a sequence of kana-kanji translation mode changes; and
changing the kana-kanji translation mode by using said learning data upon detection of a sequence of cursor position changes analogous to said learning data.

5. A data inputting method in a computer system having a front end processor changing function comprising the steps of:
storing, as learning data, the correlation between a sequence of cursor position changes indicating character input positions and a sequence of changes of a front end processor used; and
changing the front end processor by using said learning data upon detection of a sequence of cursor position changes analogous to said learning data.

6. A data inputting method in a computer system having a kana-kanji translation dictionary changing function comprising the steps of:
storing, as learning data, the correlation between a sequence of cursor position changes indicating character input positions and a sequence of changes of a kana-kanji translation dictionary used; and
changing the kana-kanji translation dictionary by using said learning data upon detection of a sequence of cursor position changes analogous to said learning data.

7. A data inputting method in a computer system having a replace/insert mode changing function comprising the steps of:
storing, as learning data, the correlation between a sequence of cursor position changes indicating character input positions and a sequence of replace/insert mode changes; and
changing the replace/insert mode by using said learning data upon detection of a sequence of cursor position changes analogous to said learning data.

8. A data inputting method in a computer system having a character/numeric input mode changing function comprising the steps of:
storing, as learning data, the correlation between a sequence of cursor position changes indicating character input positions and a sequence of character/numeric input mode changes; and
changing the character/numeric input mode by using said learning data upon detection of a sequence of cursor position changes analogous to said learning data.

9. A data inputting method in a computer system having a function for displaying a plurality of character fonts comprising the steps of:
storing, as learning data, the correlation between a sequence of cursor position changes indicating character input positions and a sequence of changes of display character font classification; and
changing the font classification to be displayed by using said learning data upon detection of a sequence of cursor position changes analogous to said learning data.

10. A data inputting method according to Claim 1, wherein cursor position changes indicating character input position changes are carried out through a mouse or keys on a keyboard.

11. A table-format data inputting method in a computer system comprising the steps of:
storing, as learning data, the correlation between a sequence of cursor position changes indicating character input positions and a sequence of input data processing mode changes; and
changing the input data processing mode by using said learning data upon detection of a sequence of cursor position changes analogous to said learning data.

12. A form data inputting method in a computer system comprising the steps of:
storing, as learning data, the correlation between a sequence of cursor position changes indicating character input positions and a sequence of input data processing mode changes; and
changing the input data processing mode by using said learning data upon detection of a sequence of cursor position changes analogous to said learning data.

13. A method of inputting data from a GUI (Graphical User Interface) screen of an application program comprising the steps of:
storing, as learning data, the correlation between a sequence of focus position changes indicating character input positions and a sequence of input data processing mode changes in respective character input positions; and
changing the input data processing mode by using said learning data upon detection of a sequence of focus position changes analogous to said learning data.

14. A data inputting method for inputting data in a computer comprising the step of setting an input data processing mode corresponding to a sequence of cursor position changes on the basis of a result of learning of the correlation between a sequence of cursor position changes indicating character input positions and a sequence of input data processing mode changes.
